# EUROPÄISCHE PATENTSCHRIFT

(11) **EP 2 047 733 B1**
(45) Veröffentlichungstag und Bekanntmachung des Hinweises auf die Patenterteilung: **07.04.2010**
(21) Anmeldenummer: 08015121.0
(22) Anmeldetag: 27.08.2008
(51) Int. Cl.: A01B 59/043, A01B 59/06, A01D 34/66

(54) **Landmaschine**
Agricultural machine
Machine agricole

(30) Priorität: 12.10.2007 DE 202007014320 U
(43) Veröffentlichungstag der Anmeldung: 15.04.2009
(73) Patentinhaber: FELLA-Werke GmbH, 90537 Feucht (DE)
(72) Erfinder: Kohl, Bernhard, 90537 Feucht (DE); Breitenbach, Patric, 97799 Detter (DE)
(74) Vertreter: Grünecker, Kinkeldey, Stockmair & Schwanhäusser Anwaltssozietät

(56) Entgegenhaltungen:
- EP-A- 0 945 051
- EP-A- 1 800 529

## Beschreibung

Die Erfindung betrifft eine Landmaschine gemäß Oberbegriff des Patentanspruchs 1.

Die Arbeitseinheit einer solchen Landmaschine kann beispielsweise eine Mäheinheit sein, mit der landwirtschaftliches Mähgut, z.B. Futtermaterial, geschnitten wird. Die Mäheinheit wird dabei üblicherweise über eine Trageinrichtung von dem Trägerfahrzeug, in diesem Fall einem Traktor, gehalten und über eine Führungseinrichtung geführt. Dabei hat es sich für eine gute Anpassung der an dem Trägerfahrzeug angebauten, seitlich neben der Fahrspur arbeitenden Mäheinheit als vorteilhaft erwiesen, wenn die Mäheinheit über eine in Fahrtrichtung liegende und in der Nähe ihres Schwerpunktes angeordnete Gelenkachse gelenkig mit der Trageinrichtung verbunden ist, um so Bodenunebenheiten mit vertikal zu dem Boden ausgeführten Pendelbewegungen auszugleichen. Weiterhin ist im Allgemeinen ein großer vertikaler Abstand zwischen einem das Schneidwerkzeug haltenden Mähbalken und den darüber liegenden Rahmenteilen wie Schutzabdeckungen erforderlich, damit eine entsprechend große Menge an Mähgut über den Mähbalken abfließen kann. Daher ist die Gelenkachse verhältnismäßig hoch anzuordnen. Der durch den Mähbalken hervorgerufene Schleppwiderstand sowie ein insbesondere beim Auftreffen der Mäheinheit auf ein Hindernis erzeugtes, großes Nickmoment um die Querachse der Mäheinheit führt zu einer sehr hohen Belastung und Beanspruchung der Trageinrichtung, speziell für eine das Schwenklager auf nehmende Gelenkverbindung und den darüber verbundenen Tragarm. Besonders bei Mäheinheiten mit großer Arbeitsbreite entsteht zusätzlich eine hohe Beanspruchung durch ein Drehmoment um die Hochachse, wenn ein Hindernis an einem Ende des Mähbalkens auftritt. Daher sind der Tragarm und die Gelenkverbindung üblicherweise entsprechend groß dimensioniert, wodurch ein hohes Eigengewicht und hohe Herstellungskosten entstehen.

Aus der EP 0 945 051 ist eine Mäheinheit einer Landmaschine bekannt, welche über ein Kugelgelenk mit dem Tragarm verbunden ist und im seitlichen Abstand zu diesem Kugelgelenk ein Lenkerparallelogramm aufweist, um die Mäheinheit um die Quer- und Hochachse zu stabilisieren. Die in diesem Lenkerparallelogramm verwendeten Lenker sind dabei ebenfalls über an ihren jeweiligen Enden vorgesehene Kugelgelenke mit einer Haltevorrichtung des Tragarmes und mit einer am Mähbalken angeordneten weiteren Haltevorrichtung verbunden. Jedoch führt die Verwendung einer im Schwerpunkt der Mäheinheit vorgesehenen Kugelgelenkverbindung, auch in Kombination mit den für die Lenker verwendeten Kugelgelenke, zu einer komplexen und zugleich aufwändigen Trag- und Führungseinrichtungsanordnung. Für die notwendige Begrenzung des Pendelweges werden Begrenzungsseile vorgeschlagen, welche jedoch teuer und verschleißanfällig sind.

Bei der aus EP-A-1800529 bekannten Landmaschine ist die Arbeitseinheit ein Schreibenmähwerk, das in einer gegenüber dem Trägerfahrzeug seitlich versetzten Arbeitsstellung In der Gelenkverbindung mit dem Tragarm ausschließlich um die in etwa In Fahrtrichtung liegende Gelenkachse geführte Pendelbewegungen ausführen kann. Die Gelenkverbindung liegt in etwa in der Mitte zwischen den trägerfahrzeugnahen und trägerfahrzeugfemem Enden eines Portalrahmens der Arbeitseinheit und trägt und führt somit die Arbeitseinheit bei den Pendelbewegungen. In etwa mittig zwischen der Gelenkverbindung und dem trägerfahrzeugnahen Ende des Portairahmens ist eine Pendelbewegungs-Begrenzungsvorrichtung vorgesehen, die aus einer auf dem Portalrahmen lose schwenkbar gelagerten Blechlasche und einem am Tragarm seitlich fest angeordneten Blech-Gabelstück besteht. Die Blechlasche durchsetzt lose einen Schlitz des Gabelstücks und besitzt am freien Ende eine größer als der Schlitz ausgebildete Anachlagverdickung. Bei einer Pendelbewegung des trägerfahrzeugnahen Endes um die Gelenkachse nach oben kommt das trägerfahrzeugnahe Ende des Portalrahmens am Tragarm zum Anschlag, während bei einer entgegengesetzten Pendelbewegung die Anschlagverdickung der Blechlasche im Gabelstück zum Anschlag kommt. Eine Führungsaufgabe der Arbeitseinheit wird nur von der Gelenkverbindung ausgerührt, da die Pendelbewegungs-Begrenzungsvorrichtung weder Führungskräfte zur Abstützung eines Drehmoments an der Arbeitseinheit um eine die Gelenkverbindung schneidende Hochachse noch beispielsweise eines aus dem Schteppwiderstand der Arbeitseinheit resultierenden Nickmomente um eine wegen der Position der Gelenkverbindung hochliegende Horizontalachse aufzunehmen vermag.

Der vorliegenden Erfindung liegt die Aufgabe zugrunde, bei einer Landmaschine der eingangs genannten Art eine baulich einfache und funktionssichere Trag- und Führungseinrichtung bereitzustellen, mit der die Gelenkverbindung entlastet wird.

Die gestellte Aufgabe wird mit den Merkmalen des Patentanspruchs 1 gelöst.

Die Trag- und Führungseinrichtung dient dazu, die Landmaschine mit einer Arbeitseinheit an einem Trägerfahrzeug anzubringen und die Arbeitseinheit während des Betriebes zu führen. Hierzu ist der Tragarm über die Gelenkverbindung mit der Arbeitseinheit verbunden. Weiterhin weist die Trag- und Führungseinrichtung wenigstens eine Kulissenführung zur zusätzlichen, die Gelenkverbindung entlastenden Führung der Arbeitseinheit um die eine durch die Gelenkverbindung ausgebildete Gelenkachse auf. Unter einer Kulissenführung wird hierbei vorzugsweise eine wenigstens teilweise umrandete Öffnung oder ein wenigstens teilweise umrandeter Durchlass verstanden, wobei eine Bewegung der Arbeitseinheit entlang der wenigstens teilweise ausgebildeten Umrandung vorzugsweise mit wenig seitlichem Spiel geführt wird. Die Gelenkverbindung ist einachsig mit der in Fahrtrichtung liegenden Gelenkachse ausgebildet. Die Kulissenführung sollte vorzugsweise derart ausgestaltet sein, dass Rotationsbewegungen der Arbeitseinheit um mindestens eine weitere, orthogonal zu der Gelenkachse gerichtete Drehachse und/oder Querachse verhindert werden. Die Kulissenführung nimmt somit die in und entgegengesetzt der Arbeitsrichtung auf die Arbeitseinheit wirkenden Kräfte und zusätzlich die um die Drehachse (Hochachse) und Querachse entsprechend wirkenden Dreh- und Nickmomente auf, wodurch die Gelenkverbindung erheblich entlastet wird und somit der Tragarm der Trageinrichtung im Bereich der Gelenkverbindung und die Gelenkverbindung selber kleiner dimensionierbar sind. Hierzu sind zwei oder mehrere in Führungsrichtung, also in Längsrichtung der Kulissenführung mit Abstand zueinander angeordnete Führungselemente vorgesehen, um Dreh- und Nickmomente zuverlässig aufzunehmen. Dadurch kann die Gelenkverbindung entsprechend klein dimensioniert werden. Die Trag- und Führungseinrichtung ist hierdurch mit geringerem Gewicht ausbildbar. Dabei umfasst die Führungseinrichtung wenigstens zwei mit der Kulissenführung in Formschluss stehende Führungselemente. Die Kulissenführung kann entweder an der Arbeitseinheit oder an dem Tragarm angeordnet werden.

In einer bevorzugten Ausgestaltung der vorliegenden Erfindung ist die Gelenkachse der Gelenkverbindung in Fahrtrichtung ausgerichtet und/oder vorzugsweise im Schwerpunkt der Arbeitseinheit angeordnet, wodurch auf einfache Weise ein gleichmäßiger Auflagedruck über die gesamte Arbeitsbreite der Arbeitseinheit erzielt werden kann, und wird die Kulissenführung unterhalb der Gelenkachse an einem dem Trägerfahrzeug zugewandten oder trägerfahrzeugnahen Ende der Arbeitseinheit vorgesehen. Die Trag- und Führungseinrichtung kann dadurch in ihrem Aufbau weiter vereinfacht werden.

Gemäß einer weiteren bevorzugten Ausgestaltung der vorliegenden Erfindung umfasst die Führungseinrichtung wenigstens einen Anschlag zur Begrenzung der um die Gelenkachse führbaren Pendelbewegung der Arbeitseinheit, wodurch der Pendelweg der Arbeitseinheit auf einfache Weise begrenzt wird. Durch die Länge der Kulissenführung wird in einfachster Weise der für die Ausgleichsbewegung maximal mögliche Pendelweg bestimmt. Es hat sich als vorteilhaft erwiesen, nur das obere Ende der Kulissenführung als Anschlag auszubilden und die Kulissenführung unten offen zu lassen, damit eingedrungener Schmutz nach unten herausfallen kann. In diesem Fall wird für die Begrenzung des Pendelweges, des dem Trägerfahrzeug zugewandten Endes der Arbeitseinheit wenigstens ein einfacher Anschlagpuffer zwischen der Arbeitseinheit und dem Tragarm vorgesehen.

Das Führungselement kann vorzugsweise eine Führungsrolle oder ein Gleitstück umfassen, wobei die übereinander angeordneten Gleitstücke in der Kulissenführung beidseitig zwangsgeführt werden, indem diese gleitend an seitlichen Begrenzungen der Führungsöffnung anliegen. Übereinander angeordnete Führungsrollen kommen hingegen je nach Belastungsrichtung der Arbeitseinheit vorzugsweise an nur einer seitlichen Begrenzung in Anlage. Durch die Anlage der Gleitstücke oder der Führungsrollen werden Kräfte und Momente von der Führungseinrichtung aufgenommen, womit das Drehen und Nicken der Arbeitseinheit verhindert wird. Wenn mehr als zwei Führungselemente verwendet werden, können deren Dimensionen weiter verringert werden, da sich die Beträge der auf die Mehrzahl an Führungselementen wirkenden Kräfte und Momente entsprechend verteilen.

Weitere bevorzugte Ausgestaltungen der vorliegenden Erfindung sind mit den Unteransprüchen angegeben.

Weitere Einzelheiten, Vorteile und Merkmale der vorliegenden Erfindung ergeben sich aus der nachfolgenden Beschreibung eines Ausführungsbeispieles in Verbindung mit der Zeichnung. In dieser Zeichnung zeigen:
- Fig. 1: eine schematische Darstellung eines Ausführungsbeispiels einer Trag- und Führungseinrichtung gemäß der vorliegenden Erfindung mit einer an einem Trägerfahrzeug anbringbaren Mäheinheit, wobei die Mäheinheit in normaler Arbeitsstellung ausgelenkt ist;
- Fig. 2: eine schematische Darstellung des in Fig. 1 gezeigten Ausführungsbeispiels, wobei das trägerfahrzeugnahe Ende der Mäheinheit maximal in Richtung der Trageinrichtung ausgelenkt ist; und
- Fig. 3: eine vergrößerte schematische Darstellung einer Führungseinrichtung des in Fig. 1 gezeigten Ausführungsbeispiels der erfindungsgemäßen Trag- und Führungseinrichtung.

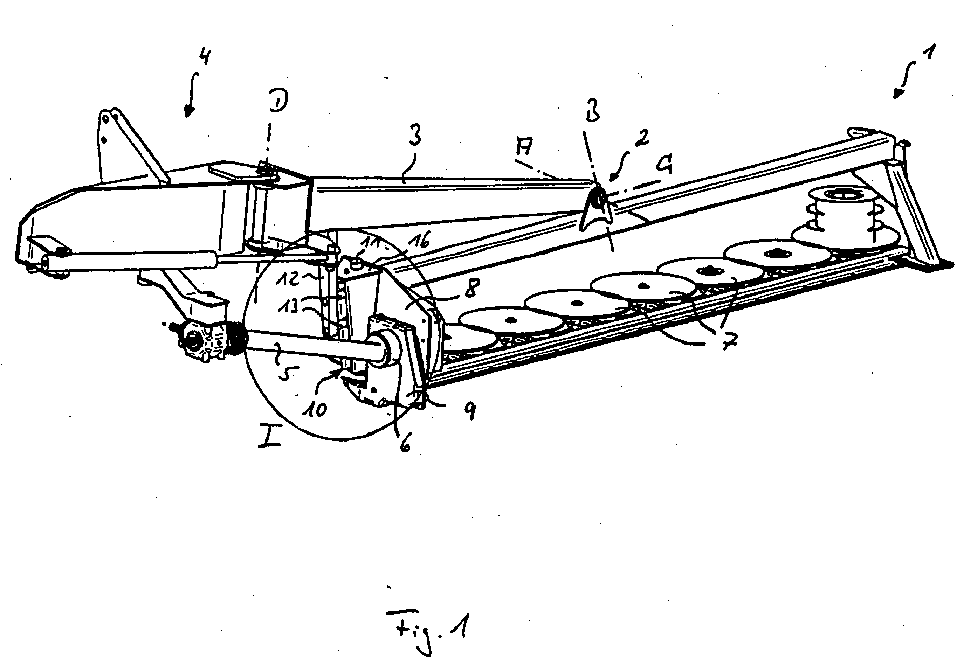

Die Fig. 1 zeigt eine schematische Darstellung eines Ausführungsbeispiels einer Trag- und Führungseinrichtung gemäß der vorliegenden Erfindung mit einer an einem Trägerfahrzeug anbringbaren Mäheinheit 1, wobei die Mäheinheit 1 in normaler Arbeitsstellung ausgelenkt ist. Der die Trag- und Führungseinrichtung mit dem Trägerfahrzeug verbindende Anbaurahmen 4 sowie die zwischen dem Anbaurahmen 4 und der Mäheinheit 1 über eine Gelenkwelle 5 und Antriebszapfen 6 führende antriebsseitige Verbindung sind vereinfacht dargestellt.

Die Trag- und Führungseinrichtung ist über einen Tragarm 3 schwenkbar um eine Hochachse D mit dem Anbaurahmen 4 verbunden, um die Mäheinheit 1 wahlweise in Arbeitsstellung oder Transportstellung verschwenken zu können. Der Tragarm 3 trägt die Mäheinheit 1 über eine über dem Schwerpunkt der Mäheinheit 1 angeordnete Gelenkverbindung 2. Die Gelenkverbindung 2 ist einachsig ausgebildet, wobei sich die Gelenkachse A in Arbeitsstellung der Mäheinheit 1 in Arbeitsrichtung erstreckt. Die Mäheinheit 1 weist an ihrer trägerfahrzeugnahen Seite eine Platte 8 auf, welche eine längliche Kulissenführung 10 und ein Getriebegehäuse 9 trägt. Die Mäheinheit 1 wird über die Kulissenführung 10 entlang einer Bewegungsbahn um die Gelenkachse A zwangsgeführt und kann somit einfach Bodenunebenheiten mit einer entsprechenden Ausgleichsbewegung um die Gelenkachse A ausweichen.

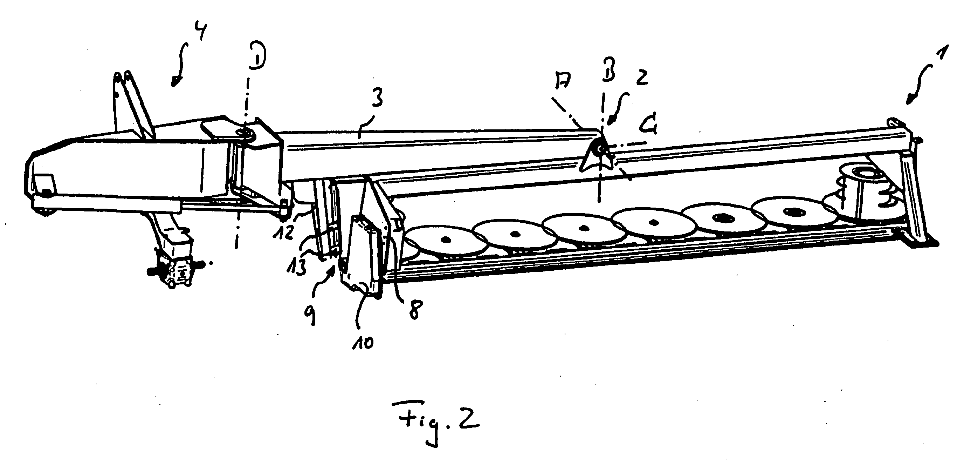

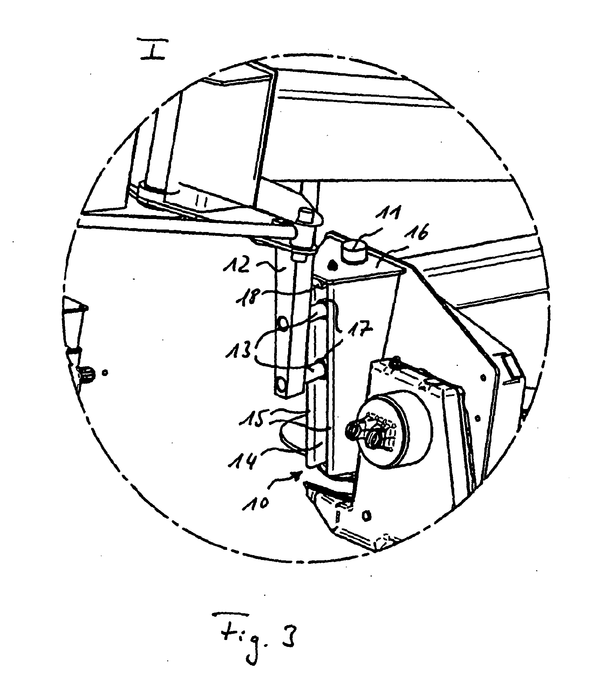

In der Fig. 2 ist das gezeigte Ausführungsbeispiel nach Fig. 1 in einer Endposition der Ausgleichsbewegung der Mäheinheit 1 gezeigt. Hierbei ist das trägerfahrzeugnahe Ende der Mäheinheit 1 maximal in Richtung des Tragarmes 3 ausgelenkt, wobei die Querachse C der Mäheinheit 1 im wesentlichen parallel zu einer Unterseite des Tragarmes 3 ist. Dabei wird die maximale Auslenkung der Mäheinheit 1 durch einen an der Tragarmunterseite zur Anlage kommenden Anschlagpuffer 11 begrenzt (Fig. 3).

Die Fig. 3 zeigt eine schematische Darstellung einer Führungseinrichtung 10-18 des in Fig. 1 gezeigten Ausführungsbeispiels der erfindungsgemäßen Trag- und Führungseinrichtung. Die Führungseinrichtung 10-18 ist an dem trägerfahrzeugnahen Ende der Mäheinheit 1 angeordnet. Die Führungseinrichtung 10-18 umfasst die Kulissenführung 10 sowie einen der Kulissenführung 10 gegenüberliegend angeordneten Führungsarm 12, welcher von der Tragarmunterseite abragt. Die Kulissenführung 10 und der Führungsarm 12 sind zueinander derart beabstandet, dass ein dadurch ausgeformter Spalt der Bewegungsbahn der Mäheinheit 1 um die Gelenkachse A angepasst ist.

Die Kulissenführung 10 weist eine Führungsöffnung 14 auf, welche sich zu dem Trägerfahrzeug öffnet. Die Führungsöffnung 14 bildet eine Eingriffsöffnung eines von der Kulissenführung 10 ausgeformten länglichen Führungsschachtes 14 aus, welcher von zwei parallel gegenüberliegend vertikalen Seitenwänden 15 und oberseitig von einem die oberen Enden der Seitenwände 15 verbindenden und als trapezförmige Platte ausgebildeten Anschlug 16 begrenzt wird. Der tragarmnahe Bereich des Führungsschachtes 14 weist eine größere Tiefe als sein tragarmfemer Abschnitt auf. Mit anderen Worten verläuft eine vordere Kante des Führungsschachtes 14 schräg im Vergleich zu der Platte 8 und ist damit in etwa der Bewegungsbahn um die Gelenkachse A angepasst.

In den Führungsschacht 14 greifen zwei an dem Führungsarm 12 übereinander angeordnete stabförmige Führungselemente 13 ein. Es können auch mehr als zwei Führungselemente 13 vorgesehen werden. Die Führungselemente 13 werden in dem Führungsschacht 14 derart geführt, dass sich das trägerfahrzeugnahe Ende der Mäheinheit 1 in einem vorbestimmten Bereich vertikal geführt bewegen lässt. Dieser Bereich definiert den Pendelweg bzw. den Ausgleichsweg der Mäheinheit 1, um in der Arbeitsstellung Unebenheiten im Untergrund ausweichen zu können. Die Führungselemente 13 werden entlang der Wandinnenfläche der Seitenwände 15 geführt. Jedes Führungselement 13 umfasst hierbei einen in den Führungsarm 12 eingesetzten Stift, dessen freies, von dem Führungsarm 12 abstehendes Ende von einer eine Führungsrolle ausbildenden Rollhülse 17 umschlossen ist, die an der Seitenwand 15 des Führungsschachts 14 rollbar geführt wird. Die Längsachsen der Stifte erstrecken sich rechtwinklig zu der Achse A und schneiden annähernd die Achse A. Die Führungsrolle 17 steht je nach Belastungsrichtung der Mäheinheit 1 mit einer der Seitenwände 15 in Berührung und weist zu der anderen Seitenwand 15 ein geringes Spiel auf.

Die Pendelbewegung wird durch die den Führungsschacht 14 oberseitig abdeckende und einen Anschlag 16 ausbildende Platte begrenzt, welche auf der dem Führungsschacht 14 zugewandten Seite einen Anschlagpuffer 18 trägt, der die Mäheinheit 1 bei Erreichen einer ersten Endposition dämpft. Auf der der Führungsschacht 14 gegenüberliegenden Seite des Anschlags 16 ist ein weiterer Anschlag durch den Puffer 11 ausgebildet, mit dem der Pendelweg des trägerfahrzeugnahen Endes der Mäheinheit 1 in Richtung des Tragarms 3 begrenzt wird. Der weitere Anschlag 11 kann beispielsweise auch als Stellschraube ausgebildet sein, um den Pendelweg der Mäheinheit 1 variabel einstellen zu können. Mit einem relativ zu dem Anschlag 16 höhenverstellbaren Anschlagpuffer 18 ist dieses ebenfalls möglich. Im Allgemeinen können zur Einstellung des Pendelweges der Mäheinheit 1 alle einem Fachmann bekannten höhenverstellbaren Mittel und Vorrichtungen eingesetzt werden.

## Patentansprüche

1. Landmaschine mit einer Arbeitseinheit (1), insbesondere einer Mäheinheit, wobei die Landmaschine an einem Trägerfahrzeug anbringbar ist und die Arbeitseinheit (1) mit einer Gelenkverbindung (2) mit einer einzigen, zumindest in normaler Arbeitsstellung der Arbeitseinheit (1) in etwa in Fahrtrichtung liegenden Gelenkachse (A) mit einem Tragarm (3) einer Trag- und Führungseinrichtung verbunden ist, **dadurch gekennzeichnet, dass** zwischen dem Tragarm (3) und der Arbeitseinheit (1) als Führungsvorrichtung (10 - 18) für Pendelbewegungen der Arbeitseinheit (1) in einer Bewegungsbahn um die Gelenkachse (A) der Gelenkverbindung (2) wenigstens eine oder zwei beabstandete Kulissenführungen (10) vorgesehen sind, in die zum Verhindern von Rotationsbewegungen der Arbeitseinheit (1) um mindestens eine orthogonal zur Gelenkachse (A) gerichtete Drehachse (B) und/oder Querachse (C) der Arbeitseinheit (1) mindestens zwei in Richtung der Bewegungsbahn der Pendelbewegungen der Arbeitseinheit (1) mit Abstand übereinander angeordnete Führungselemente (13) eingreifen, wobei sich die zumindest eine Kulissenführung (10) entweder am Tragarm (3) oder an der Arbeitseinheit (1) in Richtung der Bewegungsbahn der Pendelbewegungen um die Gelenkachse (A) erstreckt.

2. Landmaschine nach Anspruch 1, **dadurch gekennzeichnet, dass** bei zwischen trägerfahrzeugnahen und trägerfahrzeugfernen Enden der Arbeitseinheit (1) vorgesehener Gelenkverbindung (2), die, vorzugsweise, sogar oberhalb des Schwerpunkts der Arbeitseinheit liegt, die zumindest eine Kulissenführung (10) am trägerfahrzeugnahen Ende der Arbeitseinheit (1) und unterhalb der Gelenkachse (A) angeordnet ist, und dass die Führungselemente (13) an einem Führungsarm (12) angeordnet sind, der an der Unterseite des Tragarms (3) angeordnet ist.

3. Landmaschine nach wenigstens einem der vorhergehenden Ansprüche, **dadurch gekennzeichnet, dass** zur Begrenzung der um die Gelenkachse (A) ausführbaren Pendelbewegungen der Arbeitseinheit (1) an der Kulissenführung (10) zumindest ein mit dem Tragarm (3) und dem Führungselement (13) zusammenwirkender Anschlag (16) vorgesehen ist.

4. Landmaschine nach Anspruch 3, **dadurch gekennzeichnet, dass** der Anschlag (16) eine oberseitige Begrenzung einer Führungsöffnung (14) der Kulissenführung (10) bildet und die Pendelbewegung des trägerfahrzeugnahen Endes der Arbeitseinheit (1) in Richtung zum Tragarm (3) begrenzt.

5. Landmaschine nach Anspruch 3, **dadurch gekennzeichnet, dass** der Anschlag (16) wenigstens einen Anschlagpuffer (11, 18) zur Zusammenarbeit mit dem Tragarm (3) bzw. dem Führungselement (13) trägt.

6. Landmaschine nach wenigstens einem der vorhergehenden Ansprüche, **dadurch gekennzeichnet, dass** das jeweilige Führungselement (13) ein Stift ist, dessen verlängert gedachte Längsachse sich in etwa rechtwinkling zu der Gelenkachse (A) erstreckt und diese in etwa schneidet.

7. Landmaschine nach wenigstens einem der vorhergehenden Ansprüche, **dadurch gekennzeichnet, dass** der das Führungselement (13) bildende Stift mit einem freien Ende vom Führungsarm (12) absteht und zumindest endseitig in die Kulissenführung (10) eingreift.

8. Landmaschine nach Anspruch 1, **dadurch gekennzeichnet, dass** das Führungselement (13), vorzugsweise ein Stift, eine in der Kulissenführung (10) aufgenommene, frei drehbare Führungsrolle (17) oder ein in der Kulissenführung aufgenommenes Gleitstück trägt.

## Claims

1. Agricultural machine with a work unit (1), in particular a mower unit, which agricultural machine can be attached to a carrier vehicle, and the work unit (1) is connected to a support arm (3) of a support and guide mechanism by means of a link connection (2) with a single link axis (A) which lies approximately in the direction of travel at least when the work unit (1) is in the normal working position, **characterised in that** at least one or two spaced apart link guides (10) are provided between the support arm (3) and the work unit (1) acting as a guide device (10 - 18) for pendulum movements of the work unit (1) in a displacement track about the link axis (A) of the link connection (2), in which at least two guide elements (13), disposed one above the other at a distance apart in the direction of the displacement track of the pendulum movements of the work unit (1), locate in order to prevent rotating movements of the work unit (1) about at least one axis of rotation (B) oriented orthogonally with respect to the link axis (A) and/or a transverse axis (C) of the work unit (1), and the at least one link guide (10) extends either on the support arm (3) or on the work unit (1) in the direction of the displacement track of the pendulum movements about the link axis (A).

2. Agricultural machine as claimed in claim 1,
**characterised in that** when the link connection (2), which preferably even lies above the centre of gravity of the work unit, is disposed between ends of the work unit (1) close to the carrier vehicle and remote from the carrier vehicle, the at least one link guide (10) is disposed on the end of the work unit (1) close to the carrier vehicle and below the link axis (A), and the guide elements (13) are disposed on a guide arm (12) disposed on the bottom face of the support arm (3).

3. Agricultural machine as claimed in at least one of the preceding claims, **characterised in that** in order to restrict the pendulum movements effected by the unit (1) about the link axis (A), at least one stop (16) co-operating with the support arm (3) and the guide element (13) is provided on the link guide (10).

4. Agricultural machine as claimed in claim 3,
**characterised in that** the stop (16) forms a top boundary of a guide orifice (14) of the link guide (10) and the pendulum movement of the end of the work unit (1) close to the carrier vehicle is restricted in the direction towards the support arm (3).

5. Agricultural machine as claimed in claim 3,
**characterised in that** the stop (16) bears at least one stop buffer (11, 18) which co-operates with the support arm (3) respectively the guide element (13).

6. Agricultural machine as claimed in at least one of the preceding claims, **characterised in that** the respective guide element (13) is a pin, the imaginary extended longitudinal axis of which extends approximately at a right angle to the link axis (A) and approximately intersects it.

7. Agricultural machine as claimed in at least one of the preceding claims, **characterised in that** the pin constituting the guide element (13) protrudes out from the guide arm (12) with a free end, at least the end of which locates in the link guide (10).

8. Agricultural machine as claimed in claim 1,
**characterised in that** the guide element (13), preferably a pin, bears a freely rotatable guide roller (17) accommodated in the link guide (10) or a sliding piece accommodated in the link guide.

## Revendications

1. Machine agricole avec une unité de travail (1), en particulier une unité de fauchage, ladite machine agricole étant montable sur un véhicule de support et ladite unité de travail (1) étant reliée par un raccord articulé (2) à axe articulé (A) unique, sensiblement orienté vers la direction de trajet au moins en position de travail normale de l'unité de travail (1), à un bras de support (3) d'un dispositif de support et de guidage, **caractérisée en ce qu'**entre le bras de support (3) et l'unité de travail (1) sont prévues au moins une ou deux glissières de guidage (10) espacées en tant que dispositif de guidage (10-18) pour des mouvements d'oscillation de l'unité de travail (1) sur une course autour de l'axe articulé (A) du raccord articulé (2), dans lesquelles s'engagent au moins deux éléments de guidage (13) superposés avec espacement dans la direction de la course des oscillations de l'unité de travail (1), pour empêcher des mouvements de rotation de l'unité de travail (1) autour d'au moins un axe de rotation (B) orthogonal à l'axe articulé (A) et/ou d'un axe transversal (C) de l'unité de travail (1), la ou les glissières de guidage (10) s'étendant soit sur le bras de support (3) soit sur l'unité de travail (1) dans la direction de la course des oscillations de l'unité de travail autour de l'axe articulé (A).

2. Machine agricole selon la revendication 1, **caractérisée en ce qu'**en cas de raccord articulé (2) prévu entre l'extrémité à proximité du véhicule de support et l'extrémité éloignée du véhicule de support de l'unité de travail (1), ledit raccord étant même de préférence situé au-dessus du centre de gravité de l'unité de travail (1), la ou les glissières de guidage (10) sont disposées à l'extrémité à proximité du véhicule de support et en-dessous de l'axe articulé (A), et **en ce que** les éléments de guidage (13) sont disposés sur un bras de guidage (12) disposé sur le dessous du bras de support (3).

3. Machine agricole selon au moins une des revendications précédentes, **caractérisée en ce que**, pour la limitation des mouvements d'oscillation de l'unité de travail (1) exécutables autour de l'axe articulé (A), il est prévu au moins une butée (16) sur la glissière de guidage (10), laquelle coopère avec le bras de support (3) et l'élément de guidage (13).

4. Machine agricole selon la revendication 3, **caractérisée en ce que** la butée (16) forme une limitation supérieure d'une ouverture de guidage (14) de la glissière de guidage (10) et limite le mouvement d'oscillation de l'extrémité à proximité du véhicule de support dans la direction du bras de support (3).

5. Machine agricole selon la revendication 3, **caractérisée en ce que** la butée (16) supporte au moins un tampon de butée (11, 18) pour coopérer avec le bras de support (3) ou l'élément de guidage (13).

6. Machine agricole selon au moins une des revendications précédentes, **caractérisée en ce que** chaque élément de guidage (13) est une barre dont l'axe longitudinal théoriquement prolongé s'étendrait perpendiculairement à l'axe articulé (A) et couperait celui-ci.

7. Machine agricole selon au moins une des revendications précédentes, **caractérisée en ce que** la barre formant l'élément de guidage (13) sort du bras de guidage (12) par une extrémité libre et s'engage dans la glissière de guidage (10) au moins à son extrémité.

8. Machine agricole selon la revendication 1, **caractérisée en ce que** l'élément de guidage (13), de préférence une tige, supporte un galet de guidage (17) librement rotatif, logé dans la glissière de guidage (10), ou une pièce coulissante logée dans la glissière de guidage.
